# EUROPEAN PATENT APPLICATION

(11) **EP 2 088 013 A1**
(43) Date of publication of application: **12.08.2009**
(21) Application number: 09001523.1
(22) Date of filing: 04.02.2009
(51) Int. Cl.: B60H 1/00, B60H 1/32

(54) **Air conditioning system for vehicle**

(30) Priority: 06.02.2008 JP 2008026267
(71) Applicant: Calsonic Kansei Corporation, Saitama 331-8501 (JP)
(72) Inventor: Yoshioka, Hiroki, Saitama 331-8501 (JP)
(74) Representative: Grünecker, Kinkeldey, Stockmair & Schwanhäusser Anwaltssozietät

(57) **Abstract**

An air conditioning system includes an air-cooling unit and an air-heating unit. On a first path in the cooling-unit, provided are a compressor for first refrigerant, a condenser for the first refrigerant, front and rear expansion units for the first refrigerant, and an front and rear evaporators to cool air. On a second path in the air-heating unit, provided are a pump for second refrigerant, and front and rear heater cores for the second refrigerant. The condenser is located also on the second path to achieve heat-exchanging between the first refrigerant and the second refrigerant. During air-heating, air heated by the front and rear heater cores is supplied to a vehicle compartment as conditioned air. During air-cooling, air cooled by the front and rear evaporator is supplied to the vehicle compartment as conditioned air.

## Description

### BACKGROUND OF THE INVENTION

### 1. Field of the Invention

The present invention relates to a dual-type air conditioning system for a vehicle that can achieve air-heating or air-cooling selectively.

### 2. Description of Related Art

Japanese Patent Application Laid-Open Number 2002-98430 (Patent Document) discloses a conventional air conditioning system (fourth embodiment: Figs. 9 and 10). The air conditioning system includes a heat-pump type cooling unit and an air-heating circulation unit. The heat-pump type cooling unit has a first circulation path along which first refrigerant circulates. The air-heating circulation unit has a second circulation path along which second refrigerant circulates.

A compressor, a heat-radiating side of an internal heat exchanger, an in-compartment heat exchanger, an expansion valve and an external heat exchanger are provided on the first circulation path in the heat-pump type cooling unit. Variety of bypass paths and many of changeover valves for changing over paths of the first refrigerant are provided on the first circulation path.

In a heating mode, each of the internal heat exchanger and the in-compartment heat exchanger functions as a condenser to radiate heat from the first refrigerant. In addition, the external heat exchanger functions as an evaporator to receive heat by the first refrigerant. In a cooling mode, the external heat exchanger functions as a condenser to radiate heat from the first refrigerant. In addition, the in-compartment heat exchanger functions as an evaporator to receive heat by the first refrigerant. The paths are changed over to achieve the above functions in each mode.

A pump for circulating the second refrigerant, a heater core and a heat-receiving side of the internal heat exchanger 102 are provided on the second circulation path in the air-heating circulation unit. The heater core is provided within an air-conditioning duct opened toward the vehicle compartment.

The vehicle compartment is air-heated or air-cooled with the in-compartment heat exchanger in the heat-pump type cooling unit and the heater core being functioned as heat sources in the heating mode or with the in-compartment heat exchanger in the heat-pump type cooling unit being functioned as a cool source in the cooling mode.

### SUMMARY OF THE INVENTION

However, in the above conventional air-conditioning system, many of the bypass paths and the changeover valves are needed in order to change the flowing path of the first refrigerant because the heat-pump type cooling unit is used both in the air-heating mode and in the air-cooling mode. As a result, configuration of the heat-pump type cooling unit must be complex. Note that a dual-type air conditioning system tends to be applied to a large-compartment vehicle such as a mini-van and a one-box car. Configuration of the heat-pump type cooling unit must be further complicated because more of the bypass paths and the changeover valves are needed when such a dual-type air conditioning system is applied to a large-compartment vehicle.

The above-mentioned Patent Document discloses another system (Fig. 1). The system includes a heat-pump type heating unit and a hot-water circulation unit for air-heating. The heat-pump type heating unit has a first circulation path along which first refrigerant circulates. The hot-water circulation unit has a second circulation path along which second refrigerant circulates. A compressor, a heat-radiating side of an internal heat exchanger, a high-pressure-side heat exchanger, an expansion valve and a low-pressure-side heat exchanger are provided on the first circulation path in the heat-pump type heating unit. A pump, a heat-receiving side of the internal heat exchanger and a heater for air-heating are provided on the second circulation path in the hot-water circulation unit. The system utilizes heat got in the heat-pump type heating unit via the high-pressure-side heat exchanger or the hot-water circulation unit. Since it is not needed to change over flowing path of the first refrigerant, configuration of the system can be made simple. However, the system cannot achieve air-cooling. In addition, the heating system is not used for a vehicle but for home use.

Therefore, an object of the present invention is to provide a dual-type air conditioning system for a vehicle that achieves air-heating or air-cooling selectively by using a heat-pump type cooling unit with configuration of the heat-pump type cooling unit being made simplified. In addition, general configuration of the air conditioning system can be also simplified.

An aspect of the present invention is to provide an air conditioning system for a vehicle that includes a heat-pump type cooling unit including a first circulation path in which first refrigerant circulates and an air-heating unit including a second circulation path in which second refrigerant circulates. The second refrigerant is liquid and capable of taking sensible heat change due to heat-changing. A compressor for compressing the first refrigerant, a condenser located also on the second circulation path for radiating heat of the first refrigerant to the second refrigerant, a front expansion unit for expanding the first refrigerant, a rear expansion unit for expanding the first refrigerant, a front evaporator for heat-exchanging between the first refrigerant expanded by the front expansion unit and air to cool the air; and a rear evaporator for heat-exchanging between the first refrigerant expanded by the rear expansion unit and air to cool the air are provided on the first circulation path. A pump for circulating the second refrigerant, a front heater core for heat-exchanging between the second refrigerant and air to heat the air, and a rear heater core for heat-exchanging between the second refrigerant and air to heat the air are provided on the second circulation path. The front evaporator and the front heater core are provided in a front air-conditioning dust capable of supplying conditioned air to a front area in the vehicle compartment by a blower fan. The rear evaporator and the rear heater core are provided in a rear air-conditioning dust capable of supplying conditioned air to a rear area in the vehicle compartment by another blower fan.

According to the aspect of the present invention, configuration of the heat-pump type cooling unit can be simplified because the first refrigerant in the heat-pump type cooling unit is circulated along the substantially constant first flow path despite operation modes (air-heating or air-cooling). In addition, air-heating and air-cooling can be achieved selectively by radiating heat received from the condenser to an inside of the vehicle compartment using the heater cores or to the outside of the vehicle compartment. Therefore, provided can be a dual-type air conditioning system for a vehicle that achieves air-heating or air-cooling selectively by using the heat-pump type cooling unit having a simple configuration. Further, general configuration of the air conditioning system can be also simplified. Especially, the general configuration of the air conditioning system can be further simplified in case where an independent radiator is not provided on the second circulation path.

Furthermore, heat transfer efficiency of the system can be improved and downsizing of the system can be achieved because the refrigerant in the second circulation path takes sensible heat change in liquid phase without changing its phase.

It is preferable that air heated by at least one of the front heater core and the rear heater core is supplied to the vehicle compartment as conditioned air during air-heating operation, and at least one of the front heater core and the rear heater core is used as a radiator and air cooled by at least one of the front evaporator and the rear evaporator is supplied to the vehicle compartment as conditioned air during air-cooling operation.

According to this configuration, it is not needed to provide an independent radiator on the second circulation path similarly to the above-described first embodiment, because any one of the front heater core and the rear heater core can be used as a radiator of the second refrigerant.

It is preferable that a radiator for radiating heat of the second refrigerant to an outside of a vehicle compartment is further provided on the second circulation path.

According to this configuration, air-heating and air-cooling can be achieved selectively by radiating heat received from the condenser to the outside of the vehicle compartment at the radiator or to the inside of the vehicle compartment using the heater cores. Since the independent radiator is provided, radiating performance of the system can be ensured stably and also improved.

It is further preferable that the system further comprises a radiator-bypass path for bypassing the radiator, and a radiation flow-path changeover valve for changing over flow of the second refrigerant to the radiator or to the radiator-bypass path.

According to this configuration, degradation of the air-heating performance can be prevented because the flow path can be changed over so as to or not to flow the refrigerant through the radiator.

It is yet further preferable that the second refrigerant is flown to the radiator-bypass path by the radiation flow-path changeover valve and air heated by at least one of the front heater core and the rear heater core is supplied to the vehicle compartment as conditioned air during air-heating operation, and the second refrigerant is flown to the radiator by the radiation flow-path changeover valve and air cooled by at least one of the front evaporator and the rear evaporator is supplied to the vehicle compartment as conditioned air during air-cooling operation.

According to this configuration, configuration of the system can be simplified relatively because it can be simply done to change over the flow path so as to or not to flow the second refrigerant into the radiator depending on the operation modes (air-heating or air cooling). Therefore, the general configuration of the air conditioning system can be further simplified.

It is preferable that a heater for heating the second refrigerant is further provided on the second circulation path.

According to this configuration, sufficient heating performance can be achieved even under a very low temperature condition in a vehicle without large heat source such as an internal combustion engine because air can be heated by combining heat generated in the heat-pump type cooling unit and heat generated by the heater during air-heating.

It is preferable that a first flow-path changeover unit is provided on the first circulation path, and the first flow-path changeover unit changes over flow of the first refrigerant (i) to both of one flow path section on which the front expansion unit and the front evaporator are provided and another flow path section on which the rear expansion unit and the rear evaporator are provided, or (ii) to any one of the one flow path section and the other flow path section.

According to this configuration, air-cooling can be achieved for any one of or both of a front area and a rear area in the vehicle compartment.

It is preferable that a second flow-path changeover unit is provided on the second circulation path, and the second flow-path changeover unit changes over flow of the second refrigerant (i) to both of one flow path section on which the front heater core is provided and another flow path section on which the rear heater core is provided, or (ii) to one of the one flow path section and the other flow path section.

According to this configuration, air-heating can be achieved for any one of or both of a front area and a rear area in the vehicle compartment.

It is preferable that the system is configured to be able to discharge air cooled by the rear evaporator to an outside of a vehicle compartment.

According to this configuration, the vehicle compartment can be heated efficiency because cooled air can be discharged to the outside of the vehicle compartment during air-heating. Cooled air passing through the rear evaporator can be discharged more easily even with a simple structure than cooled air passing through the front evaporator because negative pressure occurs at a rear side of a vehicle body when a vehicle running.

It is preferable that the system is configured to be able to discharge air heated by the rear heater core to an outside of a vehicle compartment.

According to this configuration, the vehicle compartment can be cooled efficiency because heated air can be discharged to the outside of the vehicle compartment during air-cooling. Heated air passing through the rear heater core can be discharged more easily even with a simple structure than heated air passing through the front heater core because negative pressure occurs at a rear side of a vehicle body when a vehicle running.

### BRIEF DESCRIPTION OF THE DRAWINGS

Fig. 1 is a configuration diagram of an air conditioning system according to a first embodiment of the present invention;
Fig. 2 is a configuration diagram showing refrigerant flows during air-heating in the first embodiment;
Fig. 3 is a configuration diagram showing refrigerant flows during air-cooling in the first embodiment;
Fig. 4 is a layout drawing of an inside of an air conditioning front duct during air-heating in the first embodiment of the present invention;
Fig. 5 is a layout drawing of the inside of the air conditioning front duct during air-cooling in the first embodiment of the present invention;
Fig. 6 is a layout drawing of an inside of an air conditioning rear duct during air-heating in the first embodiment of the present invention;
Fig. 7 is a layout drawing of the inside of the air conditioning rear duct during air-cooling in the first embodiment of the present invention;
Fig. 8 is a configuration diagram of an air conditioning system according to a second embodiment of the present invention;
Fig. 9 is a configuration diagram showing refrigerant flows during air-heating in the second embodiment; and
Fig. 10 is a configuration diagram showing refrigerant flows during air-cooling in the second embodiment.

### DETAILED DESCRIPTION OF THE EMBODIMENT

Hereinafter, embodiments according to the present invention will be explained with reference to drawings.

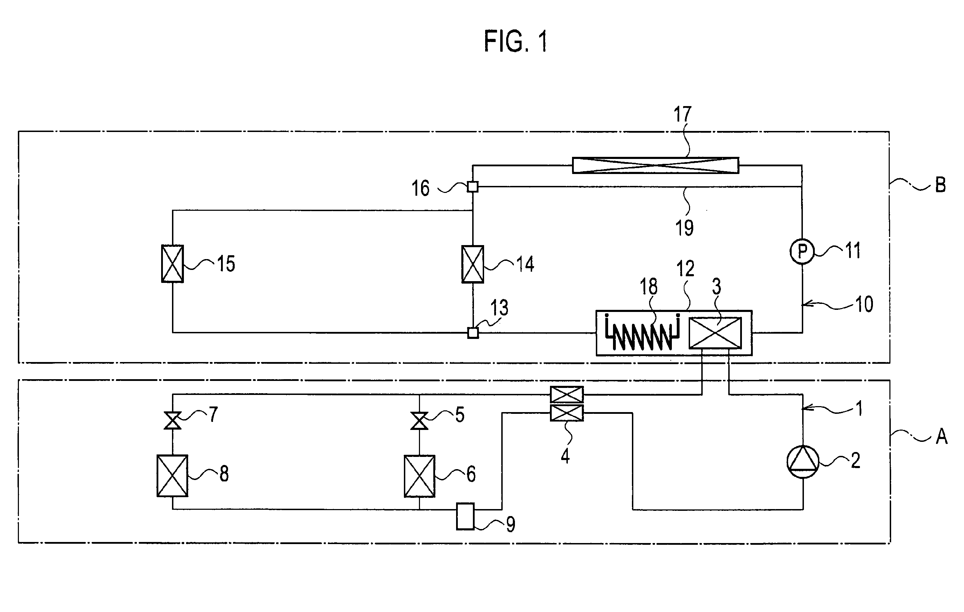

A first embodiment of an air conditioning system for a vehicle according to the present invention will be explained with reference to Figs. 1 to 7. As shown in Fig. 1, the air conditioning system is combined of a heat-pump type cooling unit A and an air-heating circulation unit B.

The heat-pump type cooling unit A includes a first circulation path 1. The first circulation path 1 is filled with first refrigerant (CO₂). A compressor 2, a water-cooled condenser 3, an internal heat exchanger 4, a front expansion valve (front expansion unit) 5, a front evaporator 6, a rear expansion valve (rear expansion unit) 7, a rear evaporator 8 and a accumulator 9 are provided on the first circulation path 1. A flow path section on which the front expansion valve 5 and the front evaporator 6 are provided and another flow path section on which the rear expansion valve 7 and the rear evaporator 8 are made parallel.

The compressor 2 inhales the relatively low-temperature and pressure first refrigerant and discharges the high-temperature and pressure first refrigerant after compressing it.

The water-cooled condenser 3 is arranged within an after-mentioned unit container 12 on the second circulation path 10. The first refrigerant output from the compressor 2 is cooled by the second refrigerant. Specifically, heat-exchanging is achieved between the first refrigerant and the second refrigerant at the water-cooled condenser 3. The second refrigerant is heated by the first refrigerant.

The internal heat exchanger 4 achieves heat-exchanging between the first refrigerant liquid output from the water-cooled condenser 3 and the lower-temperature first refrigerant gas output from the accumulator 9. The first refrigerant output from the water-cooled condenser 3 is cooled further.

The front expansion valve 5 is full-closed to prevent the first refrigerant from flowing into the front evaporator 6. The rear expansion valve 7 is full-closed to prevent the first refrigerant from flowing into the rear evaporator 8. In other words, the front expansion valve 5 and the rear expansion valve 7 are configured as a first flow-path changeover unit that changes over the first refrigerant flow. In one case, the first refrigerant flow is made flown into one flow path section with the front expansion valve 5 and the front evaporator 6 and into another flow path section with the rear expansion valve 7 and the rear evaporator 8. In another case, the first refrigerant flow is made flown only into the other flow path section with the rear expansion valve 7 and the rear evaporator 8.

The front expansion valve 5 expands the first refrigerant (reduces the pressure of the first refrigerant) had passed through the internal heat exchanger 4 and sends it to the front evaporator 6 as a low-temperature and pressure gas.

The front evaporator 6 achieves heat-exchanging between the first refrigerant liquid output from the front expansion valve 5 and air passing through the front evaporator 6. The air passing through the front evaporator 6 is cooled down by the first refrigerant.

The rear expansion valve 7 expands the first refrigerant (reduces the pressure of the first refrigerant) had passed through the internal heat exchanger 4 and sends it to the rear evaporator 8 as a low-temperature and pressure gas.

The rear evaporator 8 achieves heat-exchanging between the first refrigerant liquid output from the rear expansion valve 7 and air passing through the front evaporator 6. The air passing through the front evaporator 6 is cooled down by the first refrigerant.

The accumulator 9 separates the first refrigerant output from the front evaporator 6 and/or the rear evaporator 8 into gas phase and liquid phase. The accumulator 6 sends out the first refrigerant in the gas phase to the internal heat exchanger 4 and temporally holds the first refrigerant in the liquid phase therein.

The air-heating circulation unit B includes a second circulation path 10. The second circulation path 10 is filled with second refrigerant (liquid such as water and antifreeze solution). A pump 11, the unit container 12, a second flow-path changeover valve (second flow-path changeover unit) 13, a front heater core 14, a rear heater core 15, a radiation flow-path changeover valve 16 and a radiator 17 are provided on the second circulation path 10.

The pump 11 inhales the second refrigerant and then pumps it out in order to circulates it along the second circulation path 10. The second refrigerant liquid pumped by the pump 11 circulates along the second circulation path 10 in liquid phase without changing its phase. The second refrigerant takes sensible heat change due to heat-changing.

The unit container 12 is a space having a larger cross-sectional area than that of the second circulation path 10. The above-mentioned water-cooled condenser 3 and an electric heater 18 are contained within the unit container 12.

The electric heater 18 is provided downstream of the water-cooled condenser 3 and heats the second refrigerant by its heat with being energized.

The second flow-path changeover valve 13 changes over the second refrigerant flow. In one case, the second refrigerant flow is made flown into one flow path section with the front heater core 14 and into another flow path section with the rear heater core 15. In another case, the second refrigerant flow is made flown only into the other flow path section with the rear heater core 15.

The front heater core 14 achieves heat-exchanging between the second refrigerant and air passing through the front heater core 14. The air passing through the front heater core 14 is heated.

The rear heater core 15 achieves heat-exchanging between the second refrigerant and air passing through the rear heater core 15. The air passing through the rear heater core 15 is heated.

The radiator 17 is a unit for radiating heat of the second refrigerant to fresh air. The fresh air is blown to the radiator 17 by an electric fan or air flow due to a vehicle running and then heat-exchange is achieved between the second refrigerant and the fresh air.

A radiator-bypass flow path 19 is provided in the second circulation path 10 so as to bypass the radiator 17. The radiation flow-path changeover valve 16 changes over the second refrigerant flow. In one case, the second refrigerant flow is made flown into a flow path section with the radiator 17. In another case, the second refrigerant flow is made flown into the radiator-bypass flow path 19.

Next, behavior (air-heating operation and air-cooling operation) of the above air conditioning system will be explained.

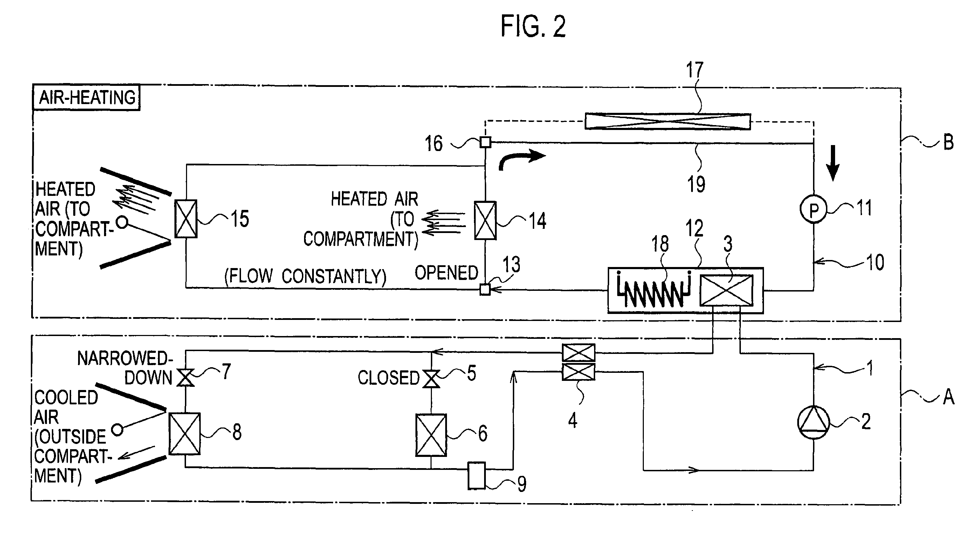

During an air heating operation as shown in Fig. 2, the compressor 2 is driven and the front expansion valve 5 is full-closed in the heat-pump type cooling unit A. The pump 11 is driven and the radiation flow-path changeover valve 16 is changed over so as to flow the second refrigerant through the radiator-bypass flow path 19 in the air-heating circulation unit B.

The first refrigerant flows along a circulation path passing through the water-cooled condenser 3, the internal heat exchanger 4, the rear expansion valve 7, the rear evaporator 8 and the accumulator 9. The second refrigerant flows along a circulation path passing thorough the unit container 12, the front heater core 14, the rear heater core 15 and the radiator-bypass flow path 19. The second refrigerant heated in the water-cooled condenser 3 flows into the front heater core 14 and the rear heater core 15 to heat air passing through the front heater core 14 and the rear heater core 15. The heated air is supplied into front and rear areas within a vehicle compartment. Since the second refrigerant after the radiation in the front heater core 14 does not flow into the radiator 17, the second refrigerant will be iteratively heated in the water-cooled condenser 3 and the electric heater 18 without being radiated in the radiator 17.

In the air heating operation, the second refrigerant heated in the water-cooled condenser 3 will be further heated when the electric heater 18 is turned on to achieve more powerful heating performance. Since the air passing through the rear evaporator 8 is cooled, it is discharged outside the vehicle compartment as explained later.

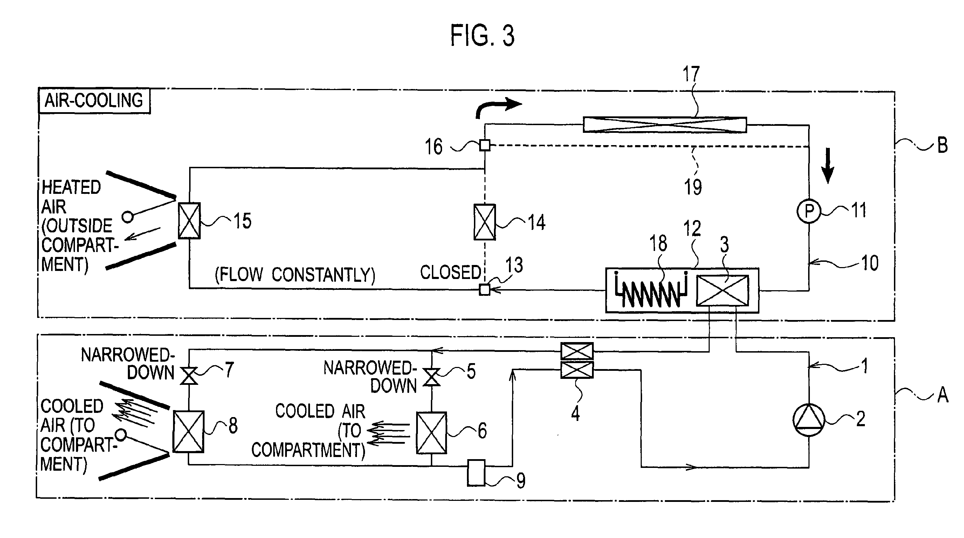

During an air cooling operation as shown in Fig. 3, the compressor 2 is driven in the heat-pump type cooling unit A. The pump 11 is driven and the electric heater 18 is turned off in the air-heating circulation unit B. In addition, the second flow-path changeover valve 13 is changed over so as to flow the second refrigerant only into the rear heater core 15 and the radiation flow-path changeover valve 16 is changed over so as to flow the second refrigerant into the radiator 17 in the air-heating circulation unit B.

The first refrigerant flows through the water the water-cooled condenser 3 and the internal heat exchanger 4 and then separates to one flow path passing through the front expansion valve 5 and the front evaporator 6 and another flow path passing through the rear expansion valve 7 and the rear evaporator 8. Subsequently, the first refrigerant flows converge and the converged first refrigerant flows through the accumulator 9. The second refrigerant flows along a circulation path passing thorough the unit container 12, the rear heater core 15 and the radiator 17. The first refrigerant is cooled in the water-cooled condenser 3 and then decompressed by the front expansion valve 5 and the rear expansion valve 7. The decompressed first refrigerant flows into the front evaporator 6 and the rear evaporator 8 to cool air passing through the front evaporator 6 and the rear evaporator 8. The cooled air is supplied into front and rear areas within a vehicle compartment. The second refrigerant is cooled in the rear heater core 15 and the radiator 17. Since air passing through the rear heater core 15 is heated, it is discharged outside the vehicle compartment as explained later.

Therefore, air cooling operation is achieved due to the operation of the heat-pump type cooling unit A and the second refrigerant is heated in the water-cooling condenser 3. When the air-conditioning system needs heat of the front heater core 14 and the rear heater core 15, heated air passing through the front heater core 14 and the rear heater core 15 is supplied into the vehicle compartment. On the contrary, when the air-conditioning system does not need heat of the second refrigerant, the radiation flow-path changeover valve 16 is changed over so as to radiate the heat in the radiator 17. When air-heating with efficiently-best performance is achieved, the second refrigerant is flown not through the radiator 17 but through the radiator-bypass flow path 19 by the radiation flow-path changeover valve 16.

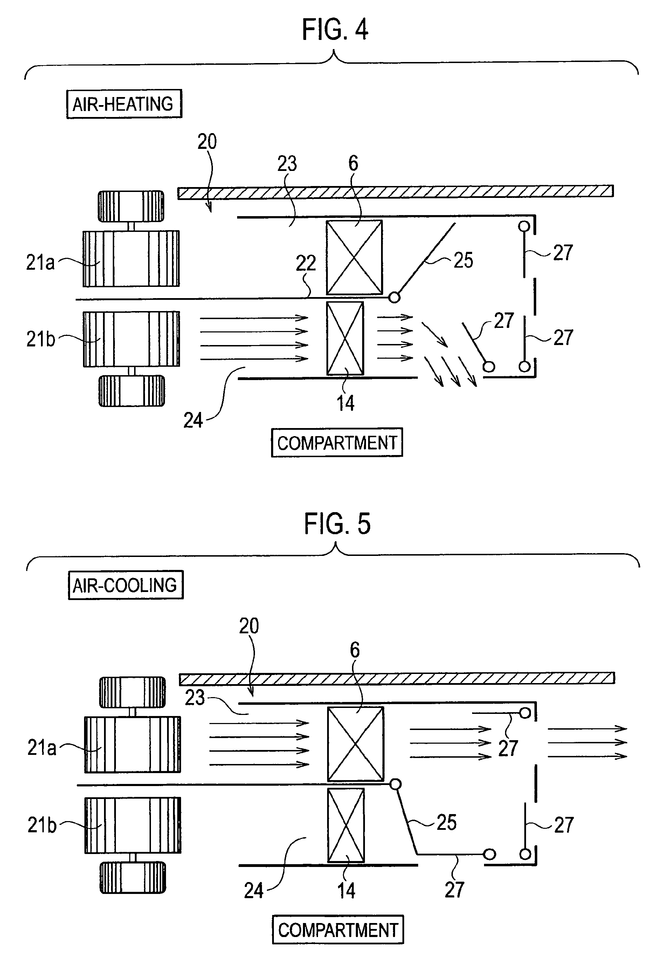

Next, configurations of a front air-conditioning duct 20 and a rear air-conditioning duct 30 in the present embodiment will be explained with reference to Figs. 4 to 7.

As shown in Figs. 4 and 5, the front air-conditioning duct 20 is configured to indraw interior air (air within a vehicle compartment) or fresh air (air outside a vehicle compartment). Part of the front air-conditioning duct 20 is separated to two parallel flow paths 23 and 24 by a partition (separator) 22. A first front blower fan 21a and the front evaporator 6 are provided on the flow path 23. A second front blower fan 21b and the front heater core 14 are provided on the flow path 24. Air flowing through the flow path 23 is cooled by the front evaporator 6. Air flowing through the flow path 24 is heated by the front heater core 14.

A mixture door 25 is provided at a downstream end of the partition 22. The mixture door 25 can close the flow path 23 with the front evaporator 6 or the flow path 24 with the front heater core 14.

Mode doors (air selector) 27 are provided at a downstream end of the front air-conditioning duct 20. Conditioned air is supplied to a desired section (s) within a front area of a vehicle compartment by changing an open/close combination of the mode doors 27.

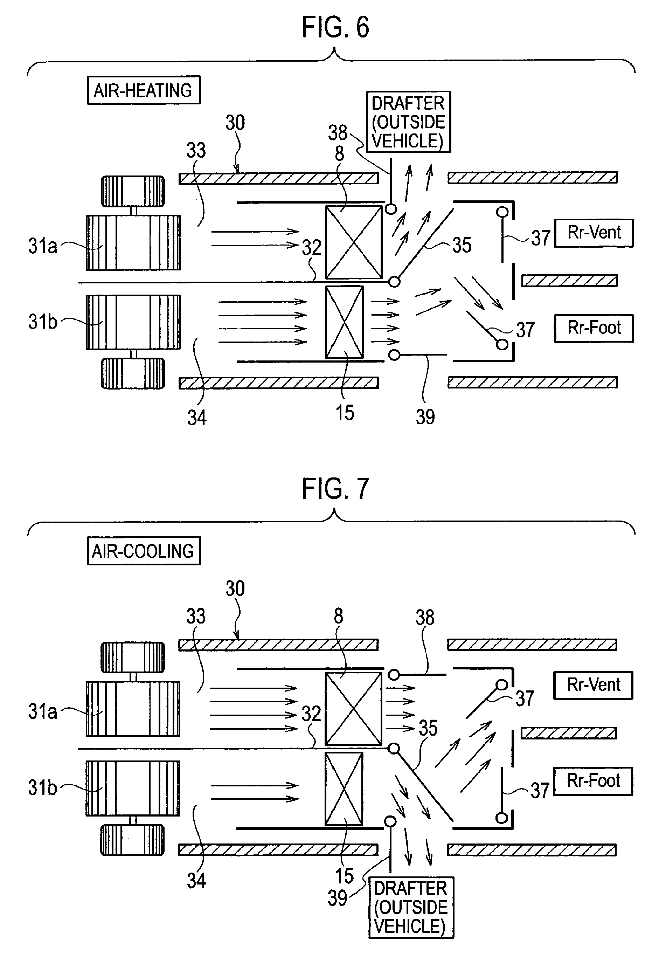

As shown in Figs. 6 and 7, the rear air-conditioning duct 30 is configured to indraw interior air or fresh air. Part of the rear air-conditioning duct 30 is separated to two parallel flow paths 33 and 34 by a partition (separator) 32. A first rear blower fan 31a and the rear evaporator 8 are provided on the flow path 33. A second rear blower fan 31b and the rear heater core 15 are provided on the flow path 34. Air flowing through the flow path 33 is cooled by the rear evaporator 8. Air flowing through the flow path 34 is heated by the rear heater core 15.

A mixture door 35 is provided at a downstream end of the partition 32. The mixture door 35 can close the flow path 33 with the rear evaporator 8 or the flow path 34 with the rear heater core 15.

Mode doors (air selector) 37 are provided at a downstream end of the rear air-conditioning duct 30. Conditioned air is supplied to a desired section (s) within a rear area of a vehicle compartment by changing an open/close combination of the mode doors 37.

A first bypass door 38 is provided at one rear side of the rear air-conditioning duct 30. The flow path 33 can be communicated with outside of the compartment by opening first bypass door 38. A second bypass door 39 is provided at another rear side of the rear air-conditioning duct 30. The flow path 34 can be communicated with outside of the compartment by opening second bypass door 38. Air cooled by the rear evaporator 8 can be discharged outside the vehicle compartment by opening the first bypass door 38 when the mixture door 35 closes the flow path 33 with the rear evaporator 33 (Fig. 6). Air heated by the rear heater core 15 can be discharged outside the vehicle compartment by opening the second bypass door 39 when the mixture door 35 closes the flow path 34 with the rear heater core 15 (Fig. 7).

Next, behavior (air-heating operation and air-cooling operation) of the above air-conditioning ducts 20 and 30 will be explained.

In the front air-conditioning duct 20 under the air-heating operation (Fig. 4), the second front flower fan 21b is driven under a condition where the mixture door 25 closes the flow path 23 with the front evaporator 6 and at least one of the mode doors 27 is opened. Therefore, air indrawn into the front air-conditioning duct 20 passes through the front heater core 14 to be heated and then the heated conditioned air is supplied to a front area within a vehicle compartment. In the rear air-conditioning duct 30 under the air-heating operation (Fig. 6), the first rear blower fan 31a and the second rear flower fan 31b are driven under a condition where the mixture door 35 closes the flow path 33 with the rear evaporator 8 and at least one of the mode doors 37 is opened. Therefore, air indrawn into the rear air-conditioning duct 30 and passing through the flow path 34 is heated by the heater core 15 and then the heated conditioned air is supplied to a rear area within the vehicle compartment. Since air indrawn into the rear air-conditioning duct 30 and passing through the flow path 33 is cooled by the rear evaporator 8, this cooled conditioned air is discharged outside the vehicle compartment.

In the front air-conditioning duct 20 under the air-cooling operation (Fig. 5), the first front flower fan 21a is driven under a condition where the mixture door 25 closes the flow path 24 with the front heater core 14 and at least one of the mode doors 27 is opened. Therefore, air indrawn into the front air-conditioning duct 20 passes through the front evaporator 6 to be cooled and then the cooled conditioned air is supplied to a front area within the vehicle compartment. In the rear air-conditioning duct 30 under the air-cooling operation (Fig. 7), the first rear blower fan 31a and the second rear flower fan 31b are driven under a condition where the mixture door 35 closes the flow path 34 with the rear heater core 15 and at least one of the mode doors 37 is opened. Therefore, air indrawn into the rear air-conditioning duct 30 and passing through the flow path 33 is cooled by the rear evaporator 8 and then the cooled conditioned air is supplied to a rear area within the vehicle compartment. Since air indrawn into the rear air-conditioning duct 30 and passing through the flow path 34 is heated by the rear heater core 15, this heated conditioned air is discharged outside the vehicle compartment.

Temperature of conditioned air to be supplied to the vehicle compartment can be controlled by changing each opening amount (position) of the mixture doors 25 and 35 under the air-heating operation and the air-cooling operation because mixture ratio of the heated conditioned air (by the heater core 14 or 15) and the cooled conditioned air (by the evaporator 6 or 8) can be controlled by changing each opening amount (position) of the mixture doors 25 and 35.

As described above, according to the present embodiment, configuration of the heat-pump type cooling unit A can be simplified because the first refrigerant in the heat-pump type cooling unit A is circulated along the substantially constant first flow path 1 despite operation modes (air-heating or air-cooling). In addition, it is sufficient that the air-heating circulation unit B has a configuration to flow the second refrigerant heated in the water-cooled condenser 3 through the heater cores 14 and 15 and the radiator 17. Air-heating and air-cooling can be achieved selectively according to the present embodiment by radiating heat received from the water-cooled condenser 3 to the outside of the vehicle compartment at the radiator 17 or to the inside of the vehicle compartment using the heater cores 14 and 15. Therefore, provided can be a dual-type air conditioning system for a vehicle that achieves air-heating or air-cooling selectively by using the heat-pump type cooling unit A having a simple configuration. In addition, general configuration of the air conditioning system can be also simplified.

Since the refrigerant in the second circulation path 10 takes sensible heat change in liquid phase without changing its phase, heat transfer efficiency of the system can be improved and downsizing of the system can be achieved.

In the present embodiment, the radiator-bypass flow path 19 and the radiation flow-path changeover valve 16 are provided to change over the second refrigerant flow to the radiator 17 or radiator-bypass flow path 19. Since the flow path can be changed over so as to or not to flow the refrigerant through the radiator 17, degradation of the air-heating performance can be prevented.

During the air-heating operation in the present embodiment, the second refrigerant is flown through radiator-bypass flow path 19 by the radiation flow-path changeover valve 16 to supply the conditioned air heated by at least one of the front heater core 14 and the rear heater core 15 to the vehicle compartment. During the air-cooling operation in the present embodiment, the second refrigerant is flown into the radiator 17 by the radiation flow-path changeover valve 16 to supply the conditioned air cooled by at least one of the front evaporator 6 and the rear evaporator 8 to the vehicle compartment. Since it can be simply done to change over the flow path so as to or not to flow the second refrigerant into the radiator 17 depending on the operation modes (air-heating or air cooling), configuration of the system can be simplified relatively.

During the air-heating operation in the present embodiment, air can be heated by combining the heat generated in the heat-pump type cooling unit A and the heat generated by the electric heater 18. Therefore, sufficient heating performance can be achieved even under a very low temperature condition in a vehicle without large heat source such as an internal combustion engine.

In the present embodiment, the condenser 3 is a water-cooled type. Since the water-cooled type has better heat conductivity that an air-cooled type, the condenser 3 can be downsized and can reduce a flow resistance to the first refrigerant. Therefore, needed driving power of the compressor 2 can be reduced by the reduced flow resistance and thereby the compressor 2 can be power-saved and downsized.

In the present embodiment, the water-cooled condenser 3 is provided upstream of the electric heater 18. Since The water-cooled condenser 3 having lower surface temperature than the electric heater 18 achieves heat-exchanging with the second refrigerant previous to the electric heater 18, temperature difference between the water-cooled condenser 3 and the second refrigerant can be ensured sufficiently. Therefore, heat-exchanging efficiency in the water-cooled condenser 3 can be improved.

During the air-heating operation in the present embodiment, the flow path 33 with the rear evaporator 8 is closed by the mixture door 35 and conditioned air passing through the rear evaporator 8 is discharged to the outside of the vehicle compartment by opening the first bypass door 38. Therefore, it is prevented that the cooled conditioned air and the conditioned air heated by the rear heater core 15 are mixed. As a result, heating performance can be improved further. In addition, cooled air passing through the rear evaporator 8 can be discharged more easily even with a simple structure than cooled air passing through the front evaporator 6 because negative pressure occurs at a rear side of a vehicle body when a vehicle running. Note that cooled air passing through the front evaporator 6 may be discharged outside the vehicle compartment. Alternatively, both cooled air passing through the rear evaporator 8 and cooled air passing through the front evaporator 6 may be discharged outside the vehicle compartment.

During the air-cooling operation in the present embodiment, the flow path 34 with the rear heater core 15 is closed by the mixture door 35 and conditioned air passing through the rear heater core 15 is discharged to the outside of the vehicle compartment by opening the second bypass door 39. Therefore, it is prevented that the heated conditioned air and the conditioned air cooled by the rear evaporator 8 are mixed. As a result, cooling performance can be improved further. In addition, heated air passing through the rear heater core 15 can be discharged more easily even with a simple structure than heated air passing through the front heater core 14 because negative pressure occurs at a rear side of a vehicle body when a vehicle running. Note that heated air passing through the front heater core 14 may be discharged outside the vehicle compartment. Alternatively, both heated air passing through the rear heater core 15 and heated air passing through the front heater core 14 may be discharged outside the vehicle compartment.

In the present embodiment, the first refrigerant flow can be changed over so as to flow into one or both of the flow paths by the expansion valves 5 and 7 (the first flow-path changeover unit). One of the flow paths has the front expansion valve 5 and the front evaporator 6 and another has the rear expansion valve 7 and the rear evaporator 8. According to this configuration, one or both of front and rear areas in a vehicle compartment is cooled selectively during the air-cooling operation. Note that the first flow-path changeover unit may be configured by changeover valves that are provided at upstream junction points of the expansion valves 5 and 7, respectively.

In the present embodiment, the second flow-path changeover valve 13 is provided so as to flow the second refrigerant into one or both of the heater cores 14 and 15. Therefore, one or both of front and rear areas in a vehicle compartment is heated selectively during the air-heating operation.

In the present embodiment, CO₂ is used as the first refrigerant. Since saturation pressure of CO₂ is sufficiently high in a very low temperature condition, flow amount of the first refrigerant can be ensured firmly.

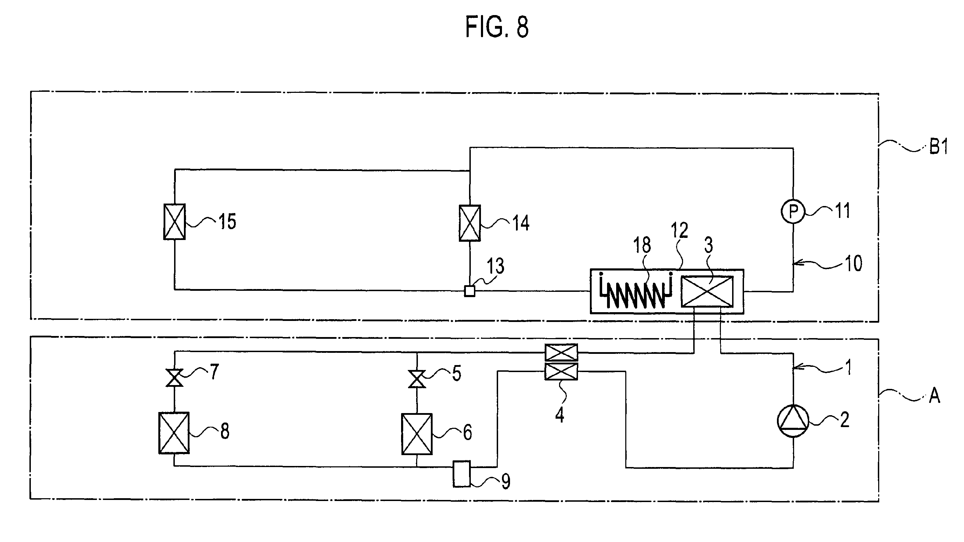

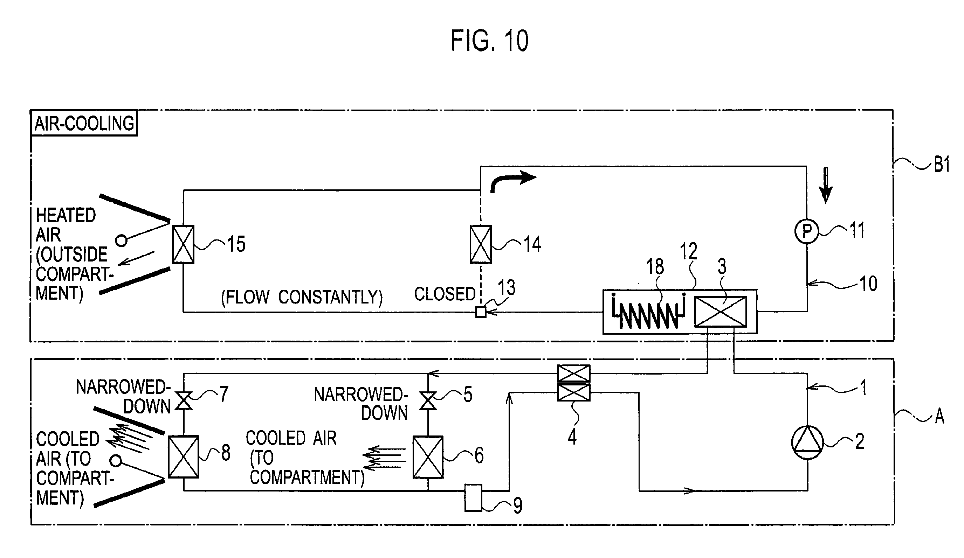

Next, a second embodiment of an air conditioning system for a vehicle according to the present invention will be explained with reference to Figs. 8 to 10. In the second embodiment as shown in Fig. 8, it is different from the above-described first embodiment that the radiator 17 and the radiation flow-path changeover valve 16 are not provided in an air-heating circulation unit B1.

Since other configurations in the present embodiment are equal or similar to those in the above-described first embodiment, their redundant explanations will be omitted by allocating identical numerals to the identical or similar configurations for clarification.

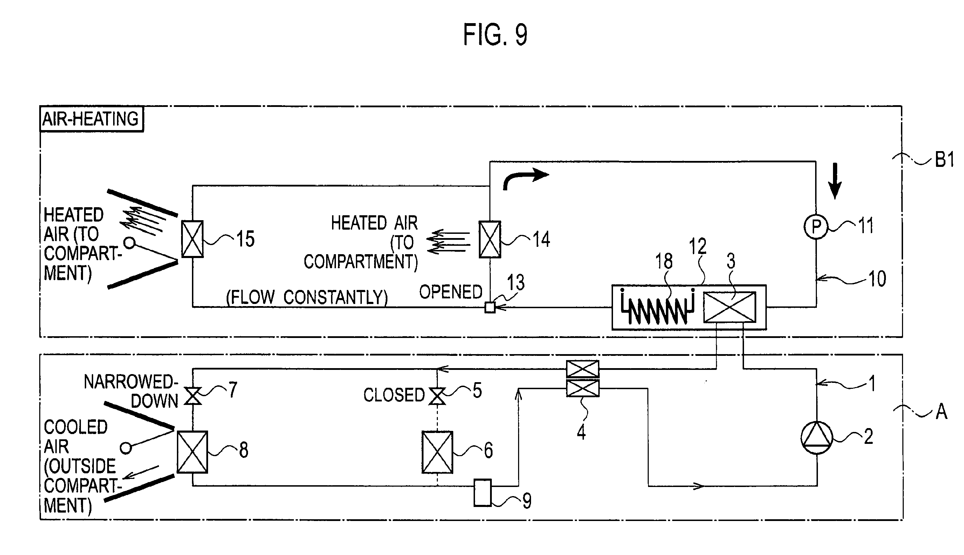

During the air-heating operation, the first refrigerant flow path and the second refrigerant flow path are the same as those in the above-described first embodiment as shown in Fig. 9. According to the present embodiment, it is more advantageous than the above-described first embodiment that it is not needed to control the radiation flow-path changeover valve.

During the air-cooling operation, heat of the second refrigerant is radiated only in the rear heater core 15 because the radiator is not provided.

According to the present embodiment, similarly to the above-described first embodiment, configuration of the heat-pump type cooling unit A can be simplified because the first refrigerant in the heat-pump type cooling unit A is circulated along the substantially constant first flow path 1 despite operation modes (air-heating or air-cooling). In addition, it is sufficient that the air-heating circulation unit B1 has a configuration to flow the second refrigerant heated in the water-cooled condenser 3 through the heater cores 14 and 15. Air-heating and air-cooling can be achieved selectively according to the present embodiment by radiating heat received from the water-cooled condenser 3 to the inside of the vehicle compartment using the heater cores 14 and 15 or to the outside of the vehicle compartment. Therefore, provided can be a dual-type air conditioning system for a vehicle that achieves air-heating or air-cooling selectively by using the heat-pump type cooling unit A having a simple configuration. In addition, general configuration of the air conditioning system can be also simplified.

During the air-heating operation in the present embodiment, air heated by the heater cores 14 and 15 is supplied to the vehicle compartment as conditioned air. During the air-cooling operation, the rear heater core 15 is used as a radiator of the second refrigerant to supply air cooled by the evaporators 6 and 8 to the vehicle compartment as conditioned air. Since the rear heater core 15 is used as the radiator of the second refrigerant as described above, it is not needed to provide an independent radiator on the second circulation path 10 similarly to the above-described first embodiment. Therefore, general configuration of the air conditioning system can be further simplified. Note that only the front heater core 14 may be used as a radiator of the second refrigerant during the air-cooling operation. Alternatively, both of the heater cores 14 and 15 may be used as radiators of the second refrigerant during the air-cooling operation.

In the present embodiment, air cooled by the rear evaporator 8 is discharged to the outside of the vehicle compartment similarly to the above-described fist embodiment. However, cooled air passing through the front evaporator 6 may be discharged outside the vehicle compartment during the air-heating operation. Alternatively, both cooled air passing through the rear evaporator 8 and cooled air passing through the front evaporator 6 may be discharged outside the vehicle compartment.

In the present embodiment, air heated by the rear heater core 15 is discharged to the outside of the vehicle compartment similarly to the above-described fist embodiment. However, heated air passing through the front heater core 14 may be discharged outside the vehicle compartment during the air-cooling operation. Alternatively, both heated air passing through the rear heater core 15 and heated air passing through the front heater core 14 may be discharged outside the vehicle compartment.

In the above-mentioned embodiments, the electric heater 18 is used as a heater. However the same operations and advantages can be achieved by using a combustion heater or the like.

In the above-mentioned embodiments, CO₂ is used as the first refrigerant and liquid such as water and antifreeze solution is used as the second refrigerant. Fluid other than these may be used as refrigerant.

In the above-mentioned embodiments, the set of the evaporators 6 and 8 and the set of the heater cores 14 and 15 are provided parallel in the air-conditioning ducts 20 and 30. However, the two sets may be provided tandem with the set of the evaporators 6 and 8 being positioned upstream in order to improve air-heating performance with dehumidification. In the above-described embodiment, air to be supplied to the blower fans 21a, 21b, 31a and 31b is arbitrarily indrawn from the inside or outside of the vehicle compartment. If air cooled by the evaporators 6 and 8 is discharged to an engine compartment, air concomitant to the discharge should be indrawn from the outside of the vehicle.

## Claims

1. An air conditioning system for a vehicle, comprising
a heat-pump type cooling unit (A) including a first circulation path (1) in which first refrigerant circulates and
an air-heating unit (B, B1) including a second circulation path (10) in which second refrigerant circulates; the second refrigerant being liquid and capable of taking sensible heat change due to heat-changing, wherein
on the first circulation path (1), provided are
a compressor (2) for compressing the first refrigerant,
a condenser (3) located also on the second circulation path (10) for radiating heat of the first refrigerant to the second refrigerant,
a front expansion unit (5) for expanding the first refrigerant,
a rear expansion unit (7) for expanding the first refrigerant,
a front evaporator (6) for heat-exchanging between the first refrigerant expanded by the front expansion unit (5) and air to cool the air; and
a rear evaporator (8) for heat-exchanging between the first refrigerant expanded by the rear expansion unit (7) and air to cool the air;
on the second circulation path (10), provided are
a pump (11) for circulating the second refrigerant,
a front heater core (14) for heat-exchanging between the second refrigerant and air to heat the air, and
a rear heater core (15) for heat-exchanging between the second refrigerant and air to heat the air;
the front evaporator (6) and the front heater core (14) are provided in a front air-conditioning dust (20) capable of supplying conditioned air to a front area in the vehicle compartment by a blower fan (21a, 21b); and
the rear evaporator (8) and the rear heater core (15) are provided in a rear air-conditioning dust (30) capable of supplying conditioned air to a rear area in the vehicle compartment by another blower fan (31a, 31b).

2. The air conditioning system according to claim 1, wherein, air heated by at least one of the front heater core (14) and the rear heater core (15) is supplied to the vehicle compartment as conditioned air during air-heating operation, and
at least one of the front heater core (14) and the rear heater core (15) is used as a radiator and air cooled by at least one of the front evaporator (6) and the rear evaporator (8) is supplied to the vehicle compartment as conditioned air during air-cooling operation.

3. The air conditioning system according to claim 1, wherein a radiator (17) for radiating heat of the second refrigerant to an outside of a vehicle compartment is further provided on the second circulation path (10).

4. The air conditioning system according to claim 3, further comprises
a radiator-bypass path (19) for bypassing the radiator (17), and
a radiation flow-path changeover valve (16) for changing over flow of the second refrigerant to the radiator (17) or to the radiator-bypass path (19).

5. The air conditioning system according to claim 4, wherein, the second refrigerant is flown to the radiator-bypass path (19) by the radiation flow-path changeover valve (16) and air heated by at least one of the front heater core (14) and the rear heater core (15) is supplied to the vehicle compartment as conditioned air during air-heating operation, and
the second refrigerant is flown to the radiator (17) by the radiation flow-path changeover valve (16) and air cooled by at least one of the front evaporator (6) and the rear evaporator (8) is supplied to the vehicle compartment as conditioned air during air-cooling operation.

6. The air conditioning system according to any one of claims 1 to 5, wherein,
a heater (18) for heating the second refrigerant is further provided on the second circulation path (10).

7. The air conditioning system according to any one of claims 1 to 6, wherein,
a first flow-path changeover unit (5, 7) is provided on the first circulation path (1), and
the first flow-path changeover unit (5, 7) changes over flow of the first refrigerant
to both of one flow path section on which the front expansion unit (5) and the front evaporator (6) are provided and another flow path section on which the rear expansion unit (7) and the rear evaporator (8) are provided, or
to any one of the one flow path section and the other flow path section.

8. The air conditioning system according to any one of claims 1 to 7, wherein,
a second flow-path changeover unit (13) is provided on the second circulation path (10), and
the second flow-path changeover unit (13) changes over flow of the second refrigerant
to both of one flow path section on which the front heater core (14) is provided and another flow path section on which the rear heater core (15) is provided,
or
to one of the one flow path section and the other flow path section.

9. The air conditioning system according to claim 1, wherein the system is configured to be able to discharge air cooled by the rear evaporator (8) to an outside of a vehicle compartment.

10. The air conditioning system according to claims 1, wherein, the system is configured to be able to discharge air heated by the rear heater core (15) to an outside of a vehicle compartment.
